(19) Europäisches Patentamt
European Patent Office
Office européen des brevets

(11) Publication number: **0 216 516 B1**

(12) **EUROPEAN PATENT SPECIFICATION**

(45) Date of publication of patent specification: **23.05.90**

(51) Int. Cl.[5]: **C 09 C 1/02,** C 09 C 3/08, C 09 C 3/10, D 21 H 17/10

(21) Application number: **86306531.4**

(22) Date of filing: **22.08.86**

(54) **Aqueous suspensions of mixtures of inorganic pigments.**

(30) Priority: **23.08.85 GB 8521131**

(43) Date of publication of application:
**01.04.87 Bulletin 87/14**

(45) Publication of the grant of the patent:
**23.05.90 Bulletin 90/21**

(84) Designated Contracting States:
**AT BE CH DE FR IT LI LU NL SE**

(56) References cited:
**DE-A-3 203 067**
**FR-A-2 370 124**
**GB-A-1 121 367**
**GB-A-1 375 731**
**GB-A-2 034 729**
**US-A-2 231 902**
**US-A-2 284 585**
**US-A-3 945 843**

(73) Proprietor: **ECC INTERNATIONAL LIMITED**
**John Keay House**
**St. Austell Cornwall PL25 4DJ (GB)**

(72) Inventor: **Reid, Paul Ian**
**Carpalla Cottage Carpalla Road**
**Foxhole St. Austell Cornwall (GB)**
Inventor: **Waters, Brian Roger**
**16 Sawles Road**
**St. Austell Cornwall (GB)**

(74) Representative: **Bull, Michael Alan et al**
**Haseltine Lake & Co. Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a process for preparing an aqueous suspension of mixtures of inorganic pigments and, more particularly but not exclusively, is concerned with a process for preparing a mixture of inorganic pigments in which one component is calcium sulphate and another component is kaolin and/or calcium carbonate. The invention is particularly concerned with a process for preparing an aqueous suspension of mixtures of inorganic pigments for use in paper coating compositions.

Many varieties of coated papers are produced today. They are principally coated with a composition, sometimes know as the coating colour, which essentially comprises an adhesive, also known as a binder, and a pigment. A discussion of the constituents of paper coating compositions and of the methods of applying such compositions to paper is given in Chapter XIX, Volume III, of the 2nd Edition of the book by James P. Casey entitled "Pulp and Paper: Chemistry and Technology". The adhesive used can be, for example, starch, casein or a synthetic resin latex; the particular adhesive used will depend, for example, on the printing process to be used, e.g. offset lithography requires the adhesive to be water-insoluble. Generally, the pigment will consist of clay together with an amount, which may be up to 60% by weight, of one or more other constituents, for example calcium carbonate, calcium sulphate, lithopone, barium sulphate, titanium pigments, talc or satin white.

In many cases a paper coating composition containing two or more inorganic pigments has improved properties as compared with a composition containing only one pigment. For example, a first pigment might confer on a paper coating composition the property of providing a highly glossy coating, but, on the other hand, might render the coating composition very viscous, while a second pigment on its own might give inferior glossing properties but have the property of forming a very fluid aqueous suspension, containing a high concentration of the pigment. A paper coating composition containing a mixture of the two pigments in appropriate proportions would have a balance of good gloss and acceptable rheological properties.

Unfortunately, however, it is often difficult to prepare aqueous suspensions of two or more inorganic pigments because one pigment may interfere with another pigment or with the dispersing agent used to deflocculate that other pigment. This problem is especially prevalent when one of the pigments is calcium sulphate because calcium sulphate is soluble in water to the extent of about 2.4 grams of calcium sulphate per litre of water, and the calcium ion is well known for its property of coagulating colloidal particles in aqueous suspension.

If a deflocculated aqueous suspension of calcium sulphate is mixed is mixed with a suspension containing either kaolin or calcium carbonate deflocculated with a conventional dispersing agent, the phenomenon known in the paper coating art as "shock" is often observed. Shock may be defined as a rapid and pronounced increase in the viscosity of an aqueous suspension containing one or more inorganic pigments. This increase in viscosity is especially serious when it occurs in a paper coating composition since the composition will generally contain at least 60% by weight of inorganic pigment. The addition of only a small proportion of calcium sulphate, typically from 1 to 5% by weight, based on the weight of the other pigments, is sufficient to induce shock. Increasing the proportion of calcium sulphate in the mixture may reduce the viscosity of the suspension slightly but it is still very difficult to prepare a suspension which contains a high percentage by weight of the mixture of pigments and yet has an acceptable viscosity.

DE—A—3203067 describes the use of carboxymethyl cellulose, either alone or in combination with starch, oxidised starch or a synthetic polymer, as a dispersing agent for calcium sulphate when used as the sole inorganic pigment in a paper coating composition. A paper coating composition can be formed which contains a high proportion by weight of calcium sulphate and at the same time has an acceptable viscosity.

FR—A—2370124 relates to a process for making coated paper using a pigment and a depolymerized starch. The pigment may consist of a mixture of calcium sulphate and aluminium hydroxide.

GB—1375731 describes the use of a particular class of polymer as the dispersing agent for various inorganic pigments for ultimate use in paint formulations.

According to the present invention, there is provided a process for preparing an aqueous suspension containing a mixture of inorganic pigments comprising calcium sulphate and at least one other pigment, which process comprises the step of combining, in suspension, said calcium sulphate and said at least one other pigment; characterised in that the or at least one of the at least one other pigment is treated, prior to its incorporation into the suspension, with a dispersing agent which is (i) a phosphate ester or (ii) a water-soluble salt of polyacrylic acid at least 15% of the carboxylic acid groups of which are esterified, and in that the pigments are employed in amounts such as to provide a suspension containing at least 55% by weight of the mixture of pigments.

An aqueous suspension prepared by the process of the present invention will have a relatively low viscosity, and may be used in the manufacture of paper coating compositions by the further incorporation therein of adhesive.

Preferably, a paper coating composition is prepared in accordance with the present invention to comprise at least 60% by weight of total solids, i.e. dry mixed pigments plus dry adhesive.

Advantageously the mixture of inorganic pigments comprise calcium sulphate (e.g. gypsum) and either one or both of calcium carbonate and kaolin.

Preferably the calcium sulphate is also treated with a dispersing agent which is (i) a phosphate ester or

(ii) a water-soluble salt of the polyacrylic acid at least 15% of the carboxylic acid groups of which are esterified, prior to its incorporation into the aqueous suspension.

The phosphate ester dispersing agent is advantageously a phosphate ester having the formula:

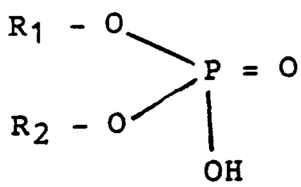

or

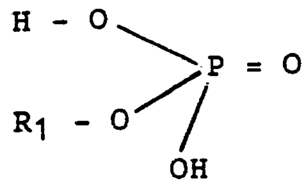

(Type A) (Type B)

wherein $R_1$ and $R_2$ are the same or different and each is an alkyl group, an aryl group, an aralkyl group or an alkaryl group. Preferably the alkyl, aryl, aralkyl or alkaryl group does not contain more than 10 carbon atoms.

When the dispersing agent is a water soluble salt of polyacrylic acid of which at least 15% of the carboxylic acid groups are esterified, the ester groups are advantageously derived from, for example, an alkyl alcohol, an aralkyl alcohol or a phenol. Preferably, the alkyl alcohol, aralkyl alcohol or phenol does not contain more than 10 carbon atoms.

The quantity of the dispersing agent used is preferably in the range of 0.2 to 5.0% by weight, based on the weight of dry pigment.

The suspension is preferably prepared by mixing an aqeuous suspension of calcium sulphate with an aqueous suspension of said at least one other pigment.

The invention will now be illustrated by the following Examples.

Example 1 (Comparative)

A kaolin clay having a particle size distribution such that 80% by weight of the particles had an equivalent spherical diameter smaller than 2 microns was mixed with sufficient water to form a suspension containing 56% by weight of dry kaolin and with 0.3% by weight, based on the weight of dry kaolin, of a sodium polyacrylate dispersing agent having a number average molecular weight of 1650.

A ground natural gypsum having a particle size distribution such that 70% by weight of the particles had an equivalent spherical diameter smaller than 2 microns was mixed with sufficient water to form a suspension containing 56% by weight of dry gypsum and with 3% by weight, based on the weight of dry gypsum, of sodium carboxymethylcellulose (CMC), as a dispersing agent for the gypsum.

The two suspensions were mixed in various proportions by weight by adding the gypsum suspension to the kaolin with hand mixing. The mixing was continued for 2 minutes after all the gypsum had been added and the viscosity of the mixed suspension was measured by means of a Brookfield Viscometer at a spindle speed of 100 rpm. The viscosity of the kaolin suspension alone and of the gypsum suspension alone was also determined in the same way.

The results are set forth in Table 1.

TABLE 1

| Parts by weight of | | |
|---|---|---|
| Kaolin | Gypsum | Viscosity mPa.s. |
| 100 | 0 | 70 |
| 0 | 100 | 530 |
| 99 | 1 | 5000 |
| 95 | 5 | 9150 |
| 90 | 10 | 6250 |
| 70 | 30 | 2550 |
| 50 | 50 | 1250 |

These results show that the addition of only 1% by weight of the gypsum suspension to the kaolin suspension causes pronounced shock. If the proportion of gypsum is increased above 10% by weight the viscosity begins to decrease again but is in each case considerably greater that the viscosity of the kaolin suspension alone.

Example 2 (Comparative)

The experiment of Example 1 was repeated except that the gypsum was treated with 1% by weight of CMC and 2% by weight of starch, both based on the weight of dry gypsum, in accordance with the disclosure of DE—A—320067. The results are set forth in Table 2.

TABLE 2

| Parts by weight of | | |
|---|---|---|
| Kaolin | Gypsum | Viscosity mPa.s. |
| 100 | 0 | 61 |
| 0 | 100 | 71 |
| 99 | 1 | 6000 |
| 95 | 5 | 9800 |
| 90 | 10 | 7800 |
| 70 | 30 | 2800 |
| 50 | 50 | 1290 |

The degree of shock experienced with this system of dispersing agents is seen to be no less than that observed in Example 1.

Example 3 (Comparative)

The experiment of Example 1 was repeated except that the sodium polyacrylate dispersing agent used for the kaolin was replaced by 0.3% by weight, based on the weight of dry kaolin, of a dispersing agent which consisted of a water soluble salt of a copolymer of acrylic acid and a second monomer having the formula:

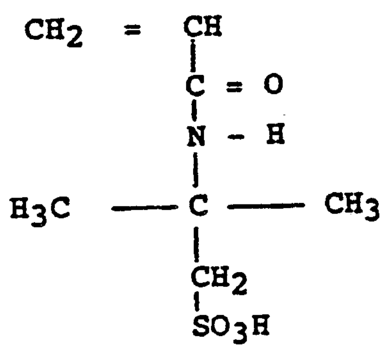

The results are set forth in Table 3.

TABLE 3

| Parts by weight of | | |
|---|---|---|
| Kaolin | Gypsum | Viscosity mPa.s. |
| 100 | 0 | 60 |
| 0 | 100 | 530 |
| 99 | 1 | 9300 |
| 95 | 5 | 4400 |
| 90 | 10 | 2950 |
| 70 | 30 | 1180 |
| 50 | 50 | 1070 |

The degree of shock is slightly reduced, as compared with the results of Example 1 and 2, but is still very pronounced.

Example 4

The experiment of Example 1 was repeated except that the sodium polyacrylate dispersing agent used for the kaolin was replaced by 0.365% by weight, based on the weight of dry kaolin, of a sodium salt of a polyacrylic acid which was partly esterified with beta-hydroxy-propanol and comprised the following repeating units:

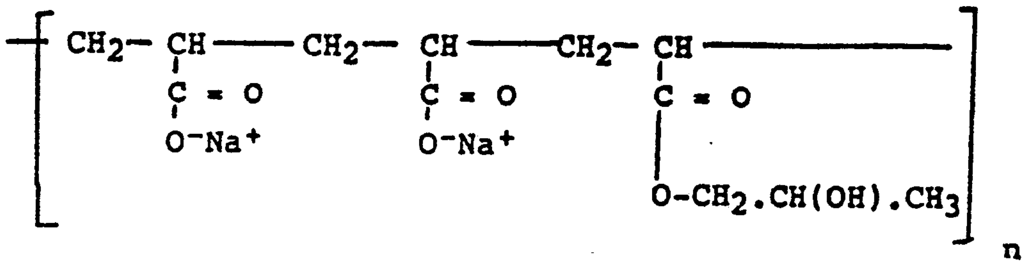

Approximately 33% of the carboxylic acid groups were esterified.

The results are set forth in Table 4.

TABLE 4

| Parts by weight of Kaolin | Gypsum | Viscosity mPa.s. |
|---|---|---|
| 100 | 0 | 54 |
| 0 | 100 | 480 |
| 99 | 1 | 5500 |
| 95 | 5 | 3600 |
| 90 | 10 | 2400 |
| 70 | 30 | 1150 |
| 50 | 50 | 1000 |

The degree of shock experienced by the suspension of mixed pigments is significantly reduced.

Example 5

The experiment of Example 1 was repeated except that the sodium polyacrylate dispersing agent used for the kaolin was replaced by 4% by weight, based on the weight of dry kaolin, of a phosphate ester of type A.

The results are set forth in Table 5.

TABLE 5

| Parts by weight of Kaolin | Gypsum | Viscosity mPa.s. |
|---|---|---|
| 100 | 0 | 470 |
| 0 | 100 | 580 |
| 99 | 1 | 1560 |
| 95 | 5 | 1250 |
| 90 | 10 | 1160 |
| 70 | 30 | 930 |
| 50 | 50 | 600 |

The degree of shock experienced by the suspension has been reduced to a very small value.

Example 6

The experiment of Example 1 was repeated except that the sodium polyacrylate dispersing agent used for the kaolin was replaced by 4% by weight, based on the weight of dry kaolin, of a phosphate ester of type B.

The results are set forth in Table 6.

TABLE 6

| Parts by weight of Kaolin | Gypsum | Viscosity mPa.s. |
|---|---|---|
| 100 | 0 | 500 |
| 0 | 100 | 680 |
| 99 | 1 | 690 |
| 95 | 5 | 680 |
| 90 | 10 | 750 |
| 70 | 30 | 1350 |
| 50 | 50 | 1380 |

In this case shock was completely eliminated.

Example 7

The experiment of Example 1 was repeated except that the sodium polyacrylate dispersing agent used for the kaolin was replaced by 4% by weight, based on the weight of dry kaolin, of a phosphate ester of type A and the CMC dispersing agent used for the gypsum was replaced by 2.6% by weight based on the weight of dry gypsum, of the same phosphate ester of type A.

The results are set forth in Table 7.

TABLE 7

| Parts by weight of Kaolin | Gypsum | Viscosity mPa.s. |
|---|---|---|
| 100 | 0 | 480 |
| 0 | 100 | 55 |
| 99 | 1 | 1170 |
| 95 | 5 | 1300 |
| 90 | 10 | 1180 |
| 70 | 30 | 980 |
| 50 | 50 | 820 |

A very small degree of shock was observed.

Example 8

The experiment of Example 1 was repeated except that the sodium polyacrylate dispersing agent used for the kaolin was replaced by 4% by weight, based on the weight of dry kaolin, of a phosphate ester of type B and the CMC dispersing agent used for the gypsum was replaced by 2% by weight based on the weight of dry gypsum, of the same phosphate ester of type B.

The results are set forth in Table 8.

TABLE 8

| Parts by weight of Kaolin | Gypsum | Viscosity mPa.s. |
|---|---|---|
| 100 | 0 | 510 |
| 0 | 100 | 112 |
| 99 | 1 | 170 |
| 95 | 5 | 170 |
| 90 | 10 | 230 |
| 70 | 30 | 155 |
| 50 | 50 | 125 |

A this case shock was substantially completely eliminated.

Example 9 (Comparative)

The experiment of Example 1 was repeated, 0.3% by weight, based on the weight of dry kaolin, of the same sodium polyacrylate dispersing agent being used for the kaolin, but the CMC dispersing agent used for the gypsum being replaced by 2.6% by weight, based on the weight of dry gypsum, of a phosphate ester of type A.

The results are set forth in Table 9.

TABLE 9

| Parts by weight of Kaolin | Gypsum | Viscosity mPa.s. |
|---|---|---|
| 100 | 0 | 69 |
| 0 | 100 | 66 |
| 99 | 1 | + 10,000 |
| 95 | 5 | " |
| 90 | 10 | " |
| 70 | 30 | " |
| 50 | 50 | " |

In this case a very serious degree of shock was observed showing that the kaolin must be treated with a dispersing agent in accordance with the invention before mixing with the gypsum suspension.

Example 10

A ground natural calcium carbonate having a particle size distribution such that 86% by weight consisted of particles having an equivalent spherical diameter smaller than 2 microns was mixed with sufficient water to form a suspension containing 56% by weight of dry calcium carbonate and with 2% by weight, based on the weight of dry calcium carbonate, of a phosphate ester of type A.

The same ground natural gypsum as was used in Examples 1—9 was mixed with sufficient water to form a suspension containing 56% by weight of dry gypsum and 3% by weight, based on the weight of dry gypsum, of CMC as a dispersing agent for the gypsum.

The viscosity of the calcium carbonate suspension alone and of the gypsum suspension alone was measured by means of a Brookfield Viscometer at a spindle speed of 100 rpm. The two suspensions were then mixed in various proportions by weight by adding the gypsum suspension to the calcium carbonate suspension with hand mixing. The mixing was continued for 2 minutes after all the gypsum had been added and the viscosity of the mixed suspension was measured by means of the Brookfield Viscometer.

The results are set forth in Table 10.

TABLE 10

| Parts by weight of Calcium Carbonate | Gypsum | Viscosity mPa.s. |
|---|---|---|
| 100 | 0 | 180 |
| 0 | 100 | 380 |
| 99 | 1 | 327 |
| 95 | 5 | 2700 |
| 90 | 10 | 2400 |
| 70 | 30 | 2200 |
| 50 | 50 | 2300 |

Only a very small degree of shock was observed.

Example 11

The experiment of Example 10 was repeated except that the CMC dispersing agent for the gypsum was replaced by 2.6% by weight, based on the weight of dry gypsum, of the same phosphate ester of type A as was used for the calcium carbonate.

The results are set forth in Table 11.

TABLE 11

| Parts by weight of Calcium Carbonate | Gypsum | Viscosity mPa.s. |
|---|---|---|
| 100 | 0 | 227 |
| 0 | 100 | 55 |
| 99 | 1 | 660 |
| 95 | 5 | 925 |
| 90 | 10 | 910 |
| 70 | 30 | 820 |
| 50 | 50 | 800 |

Again the degree of shock observed was very small.

Example 12

The experiment of Example 10 was repeated except that the type A phosphate ester dispersing agent for the calcium carbonate was replaced by 2% by weight, based on the weight of dry calcium carbonate, of a phosphate, ester of type B and the CMC dispersing agent for the gypsum was replacecd by 1.25% by weight, based on the weight of dry gypsum, of the same phosphate ester of type B.

The results are set forth in Table 12.

TABLE 12

| Parts by weight of Calcium Carbonate | Gypsum | Viscosity mPa.s. |
|---|---|---|
| 100 | 0 | 40 |
| 0 | 100 | 70 |
| 99 | 1 | 47 |
| 95 | 5 | 50 |
| 90 | 10 | 50 |
| 70 | 30 | 53 |
| 50 | 50 | 55 |

In this case shock was completely eliminated.

Example 13 (Comparative)

The experiment of Example 10 was repeated except that the type A phosphate ester dispersing agent for the calcium carbonate was replaced by 0.3% by weight, based on the weight of dry calcium carbonate, of the same sodium polyacrylate as was used in Example 1, and the CMC dispersing agent for the gypsum was replaced by 2.6% by weight, based on the weight of dry gypsum, of a type A phosphate dispersing agent

The results are set forth in Table 13.

TABLE 13

| Parts by weight of Calcium Carbonate | Gypsum | Viscosity mPa.s. |
|---|---|---|
| 100 | 0 | 30 |
| 0 | 100 | 160 |
| 99 | 1 | 2200 |
| 95 | 5 | 1920 |
| 90 | 10 | 1680 |
| 70 | 30 | 1540 |
| 50 | 50 | 1640 |

In this case a significant degree of shock was observed.

It should be noted that commercial paper coating compositions generally contain at least 60% by weight of dry pigment. In the above Examples the aqueous suspensions were prepared at a dry solids content of only 56% by weight in order to ensure that the viscosity was measurable over the complete range of proportions by weight of gypsum to the other pigment.

**Claims**

1. A process for preparing an aqueous suspension containing a mixture of inorganic pigments comprising calcium sulphate and at least one other pigment, which process comprises the step of combining, in suspension, said calcium sulphate and said at least one other pigment; characterised in that

the or at least one of the at least one other pigment is treated, prior to its incorporation into the suspension, with a dispersing agent which is (i) a phosphate ester or (ii) a water-soluble salt of polyacrylic acid at least 15% of the carboxylic acid groups of which are esterified, and in that the pigments are employed in amounts such as to provide a suspension containing at least 55% by weight of the mixture of pigments.

2. A process as claimed in Claim 1, characterised in that the mixture of inorganic pigments comprises (a) calcium sulphate and (b) calcium carbonate and/or kaolin.

3. A process as claimed in Claim 1 or 2, characterised in that the dispersing agent is a phosphate ester having the formula:

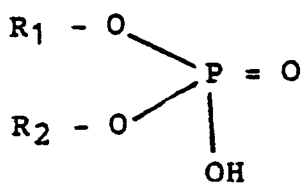 or 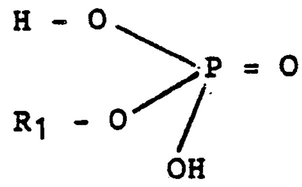

wherein $R_1$ and $R_2$ are the same or different and each is an alkyl group, an aryl group, an aralkyl group or an alkaryl group.

4. A process as claimed in any of Claims 1 to 3, characterised in that the calcium sulphate is treated, prior to its incorporation into the suspension, with a dispersing agent which is (i) a phosphate ester or (ii) a water-soluble salt of polyacrylic acid at least 15% of the carboxylic acid groups of which are esterified.

5. A process according to any one of the preceding claims, wherein there is further incorporated into the suspension an adhesive so as to form a paper coating composition comprising at least 55% by weight of the mixed pigment.

**Patentansprüche**

1. Verfahren zur Herstellung einer eine Mischung anorganischer Pigmente, die Calciumsulfat und wenigstens ein anderes Pigment umfassen, enthaltenden wäßrigen Suspension, umfassend den Schritt des Vereinigens des Calciumsulfats und des wenigstens einen anderen Pigments in Suspension, dadurch gekennzeichnet, daß das wenigstens eine andere Pigment oder wenigstens eines der anderen Pigmente, bevor es in die Suspension eingearbeitet wird, mit einem Dispergiermittel behandelt wird, das (i) ein Phosphat-Ester oder (ii) ein wasserlösliches Salz einer Polyacrylsäure, bei der wenigstens 15% der Carboxyl-Gruppen verestert sind, ist, und daß die Pigmente in solchen Mengen eingesetzt werden, daß eine Suspension bereitgestellt wird, die wenigstens 55 Gew.-% der Pigment-Mischung enthält.

2. Verfahren nach Anspruch 1, dadurch gekennzeichnet, daß die Mischung der anorganischen Pigmente (a) Calciumsulfat und (b) Calciumcarbonat und/oder Kaolin umfaßt.

3. Verfahren nach Anspruch 1 oder 2, dadurch gekennzeichnet, daß das Dispergiermittel ein Phosphat-Ester der Formel

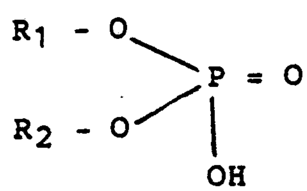 oder 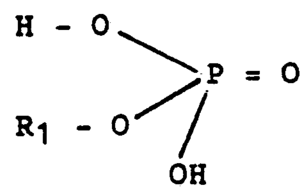 ist,

in der $R_1$ und $R_2$ gleich oder verschieden sind und jeweils eine Alkyl-Gruppe, eine Aryl-Gruppe, eine Aralkyl-Gruppe oder eine Alkaryl-Gruppe sind.

4. Verfahren nach irgendeinem der Ansprüche 1 bis 3, dadurch gekennzeichnet, daß das Calciumsulfat, bevor es in die Suspension eingearbeitet wird, mit einem Dispergiermittel behandelt wird, das (i) ein Phosphat-Ester oder (ii) ein wasserlösliches Salz einer Polyacrylsäure, bei der wenigstens 15% der Carboxyl-Gruppen verestert sind, ist.

5. Verfahren nach irgendeinem der vorhergehenden Ansprüche, worin in die Suspension weiterhin ein Kleber eingearbeitet wird, so daß eine Papier-Beschichtungsmasse gebildet wird, die wenigstens 55 Gew.-% der gemischten Pigmente enthält.

**Revendications**

1. Procédé de préparation d'une suspension aqueous, contenant un mélange de pigments inorganiques, comprenant du sulfate du calcium et au moins un autre pigment, dans lequel on associe dans une suspension, ce sulfate de calcium, et au moins un de cet autre pigment; caractérisé en ce que l'on traite le ou au moins un de cet autre pigment, avant son incorporation dans la suspension, avec un agent dispersant consistant (i) en un ester-phosphate ou (ii) en un sel soluble dans l'eau dérivé d'un acide polyacrylique dont au moins 15% des groupes acide carboxylique sont estérifiés, et en ce que les pigments

sont utilisés selon des quantités appropriées pour obtenir une suspension contenant au moins 55% en poids de pigments par rapport au mélange.

2. Procédé selon la revendication, caractérisé en ce que la mélange de pigments inorganiques, comprend (a) du sulfate de calcium, et (b) du carbonate de calcium et/ou du kaolin.

3. Procédé selon la revendication 1 ou 2, caractérisé en ce que l'agent dispersant, est un ester-phosphate, de formule:

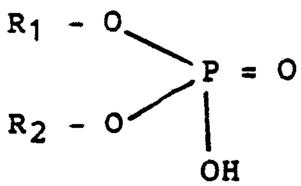

ou

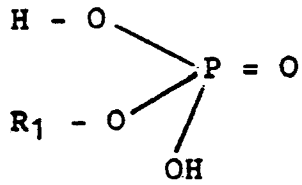

dans laquelle $R_1$ et $R_2$, sont identiques ou différents, et représentent chacun, un groupe alkyle, un groupe aryle, un groupe aralkyle ou un groupe alkaryle.

4. Procédé selon l'une quelconque des revendications 1 à 3, caractérisé en ce que le sulfate de calcium est traité, avant son incorporation dans la suspension, avec un agent dispersant, consistant (i) en un ester-phosphate ou (ii) en un sel soluble dans l'eau dérivé d'un acide polyacrylique dont au moins 15% des groupes acide carboxylique sont estérifiés.

5. Procédé selon l'une quelconque des revendications précédentes, dans lequel on incorpore en outre dans la suspension, un adhésif de façon à former une composition pour couchage de papier, comprenant au moins 55% en poids du mélange de pigments.